(19) Europäisches Patentamt
European Patent Office
Office européen des brevets

(11) **EP 3 809 015 B1**

(12) **EUROPÄISCHE PATENTSCHRIFT**

(45) Veröffentlichungstag und Bekanntmachung des Hinweises auf die Patenterteilung:
**12.07.2023 Patentblatt 2023/28**

(21) Anmeldenummer: **20197953.1**

(22) Anmeldetag: **24.09.2020**

(51) Internationale Patentklassifikation (IPC):
***F16H 49/00*** *(2006.01)*

(52) Gemeinsame Patentklassifikation (CPC):
**F16H 49/001**

(54) **WELLGETRIEBE MIT ZAHNRIEMEN**

STRAIN WAVE GEAR WITH TOOTHED BELT

RÉDUCTEUR ELLIPTIQUE POURVU DE COURROIE DENTÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.10.2019 DE 102019215966**

(43) Veröffentlichungstag der Anmeldung:
**21.04.2021 Patentblatt 2021/16**

(73) Patentinhaber: **ContiTech Antriebssysteme GmbH**
**30165 Hannover (DE)**

(72) Erfinder: **Konya, Alexander**
**30419 Hannover (DE)**

(74) Vertreter: **Continental Corporation**
**c/o Continental AG**
**Intellectual Property**
**Postfach 169**
**30001 Hannover (DE)**

(56) Entgegenhaltungen:
**DE-A1- 4 021 923     DE-A1- 19 914 555**
**DE-A1- 19 914 556     JP-A- H02 275 147**
**SU-A1- 746 144     US-A- 2 906 143**

**Beschreibung**

Die Erfindung betrifft ein Wellgetriebe mit einem rotierenden Wellgenerator, der eine umlaufende Radialkraftwelle erzeugt, die ein mit einer Außenverzahnung versehenes kraftübertragendes, elastisches Ringelement umlaufend radial verformt. Das Wellgetriebe weist weiterhin ein mit einer Innenverzahnung versehenes erstes Hohlrad auf, wobei der Teilkreisdurchmesser der Außenverzahnung des kraftübertragenden Ringelements kleiner ist als der Teilkreisdurchmesser der Innenverzahnung des ersten Hohlrads und die Außenverzahnung des kraftübertragenden Ringelements in mindestens zwei durch den Wellgenerator verformten und umlaufend über die Peripherie des ersten Hohlrads verlagerten Zahneingriffsbereichen mit entsprechenden Teilbereichen der Innenverzahnung des ersten Hohlrads in Eingriff steht.

Ebenfalls betrifft die Erfindung ein Lenkgetriebe für ein Kraftfahrzeug, bei dem mindestens eine Getriebestufe als Wellgetriebe ausgebildet ist.

Wellgetriebe, eigentlich besser als Kraftwellengetriebe zu bezeichnen, sind bekannt als "Harmonic-Drive Getriebe", bei dem ein Kraftwellenerzeuger, der so genannte Wellgenerator oder "wave generator", ein elastisches Ringelement verformt, nämlich eine relativ dünne, elastisch verformbare und mit einer Außenverzahnng versehene metallische Hülse oder Buchse, auch "flex spline" genannt. Die metallische Hülse oder Buchse greift dadurch mit ihren verformten Bereichen ein in die Innenverzahnung eines Hohlrades (circular spline), oft in zwei symmetrisch gegenüberliegenden Bereichen. Die metallische Hülse wird somit elliptisch verformt. Mit Rotation des Wellgenerators verlagert bzw. dreht sich die große Ellipsenachse, wodurch der Zahneingriffsbereich auf der Peripherie der Innenverzahnung des Hohlrades umläuft.

Dadurch, dass der Teilkreisdurchmesser der Außenverzahnung der metallischen Hülse oder Büchse kleiner ist als der Teilkreisdurchmesser der Innenverzahnung des Hohlrads, besitzt die mit einer Außenverzahnung versehene metallische Hülse oder Buchse bei gleicher Teilung bzw. gleichem Modul weniger Zähne als die Innenverzahnung des Hohlrads. Wenn die Hülse oder Buchse beispielsweise zwei Zähne weniger aufweist, vollzieht sich nach einer halben Umdrehung des Wellgenerators eine Relativbewegung zwischen metallischer Hülse und Hohlrad um einen Zahn und nach einer ganzen Umdrehung um zwei Zähne. Bei festgesetztem Hohlrad dreht sich dann die Hülse als Abtriebselement in einem der Drehung des Wellgenerators entgegengesetzten Drehsinn. Die Übersetzung/Untersetzung zwischen der Drehzahl des Wellgenerators als Antrieb und der Hülse als Abtrieb ist also sehr hoch.

In ähnlicher Weise, jedoch ohne eine solche elliptische Verformung des Kraftübertragungselementes arbeiten so genannte Cyclobelt-Getriebe oder Cyclodrive-Getriebe, die im Unterschied zu den oben beschriebenen Harmonic-Drive Getrieben die Drehbewegung des Planetenträgers formschlüssig über verzahnte Planeten oder über Nocken auf ein nicht im obigen Sinne verformbares Kraftübertragungselement übertragen, beispielsweise nämlich auf ein als beidseitig verzahnter Riemen oder als Kurvenscheibe ausgebildetes Kraftübertragungselement. Der beidseitig verzahnte Riemen oder die Kurvenscheibe können dann in einem oder mehreren Bereichen mit den entsprechend komplementär ausgebildeten Hohlrad in Eingriff stehen, über welches dann der Abtrieb erfolgt. Bei solchen Getrieben sind insbesondere die Kraftübertragungselemente schwierig auszulegen und herzustellen.

Hochpräzise Getriebe, wie sie bei Antrieben von Robotern gebraucht werden, sind eher als Wellgetriebe ausgebildet, wie eingangs beschrieben.

Die Ursprünge solcher Wellgetriebe gehen u.a. zurück auf die US 2,906,143, die bereits ein solches Getriebe offenbart und sehr einleuchtend dessen Kinematik zeigt. So sind insbesondere in den dortigen Fig. 9 und 10 anhand einer Abwicklung die Bewegungen von Wellgenerator (strain inducer oder wave generator), verformbarer Hülse (strain gear oder flex spline) und Hohlrad (ring gear oder circular spline) dargestellt. Auch hier ist eine relativ dünne, elastisch verformbare und mit einer Außenverzahnng versehene metallische Hülse als Abtriebselement vorgesehen, was bei entsprechenden Größenverhältnissen und Durchmessern durchaus möglich ist und mit der erforderlichen Verformungsfähigkeit in Einklang stehen kann, bei Getrieben mit kleinen Abmessungen und hohen Drehmomenten aber durchaus schwierig wird und sehr aufwendige Herstellungsverfahren für die verformbare Hülse erfordert.

Die häufig verwendeten englischsprachigen Begriffe sind hier lediglich eingefügt, um eine klare und eindeutige Zuordnung der teilweise vielfach unterschiedlichen Bezeichnungen im Stand der Technik zu erreichen.

Auch die DE 40 21 923 A1 offenbart ein Wellgetriebe, bei dem das Drehmoment an einem elastischen Rad abgenommen werden kann, welches mit seiner Lauffläche zonenweise mit der Lauffläche eines starren Hohlrades in Wirkverbindung gebracht wird. Dabei ist jeweils nur immer eines der im Eingriff befindlichen Räder profiliert oder verzahnt und das jeweils andere mit einem elastisch sich der Profilierung anpassenden Werkstoff beschichtet. Das übertragbare Drehmoment ist durch die Abhängigkeit von der Reibpaarung relativ begrenzt.

Für die Erfindung bestand danach die Aufgabe, ein Wellgetriebe mit einem einfach herzustellenden Wellgenerator bereitzustellen, welches dabei hoher Drehmomente sicher übertragen kann.

Gelöst wird diese Aufgabe durch die Merkmale des Hauptanspruchs. Weitere vorteilhafte Ausbildungen sind in den Unteransprüchen offenbart. Ebenfalls offenbart ist ein Lenkgetriebe, bei dem mindestens eine Getriebestufe als ein solches Wellgetriebe ausgebildet ist.

Dabei ist zunächst das elastisch verformbare kraftübertragende Ringelement als elastomerer Zahnriemen mit einer einseitigen, nämlich außenseitigen Verzahnung ausgebildet. Solche Zahnriemen sind im wesentlichen Standardbauteile und relativ einfach herzustellen. Herstellungsaufwand und Kosten für ein solches Getriebe sind also wesentlich niedriger als der Aufwand, der erforderlich wäre, um eine flexible, aber trotzdem Drehmomente übertragende Metallhülse herzustellen.

Außerdem ist ein zweites mit einer Innenverzahnung versehenes Hohlrad vorgesehen. Der Teilkreisdurchmesser der Außenverzahnung des als elastomerer Zahnriemen ausgebildeten kraftübertragenden Ringelements ist dabei auch kleiner ist als der Teilkreisdurchmesser der Innenverzahnung des zweiten Hohlrads, wobei der elastomere Zahnriemen in den umlaufend verlagerten Zahneingriffsbereichen gleichermaßen mit Teilbereichen der Innenverzahnung des zweiten Hohlrads in Eingriff steht. Das erste Hohlrad und der Zahnriemen, das zweite Hohlrad und der Zahnriemen als auch das das erste Hohlrad und das zweite Hohlrad weisen jeweils unterschiedliche Zähnezahlen auf.

Das erste Hohlrad dient somit als "Kupplungsrad", welche die Drehbewegung des Zahnriemens und des Wellgenerators in der Weise kuppelt, dass beim ersten Zahneingriff, nämlich beim Eingriff des außenverzahnten Zahnriemens in die Innenverzahnung des ersten Hohlrads oder Kupplungsrads, der Zahnriemen sich bei einem gehäusefesten Kupplungsrad in einer Richtung bewegt, die entgegengesetzt zur Drehrichtung des Wellgenerator ist, sich also entgegengesetzt zur Drehrichtung des Wellgenerator dreht.

Wäre dagegen - was hier nicht der Fall und nur zum Verständnis und zum Vergleich mit der Offenbarung der o.g. US 2,906,143 zu überlegen ist - der Zahnriemen festgesetzt, so würde sich aufgrund der größeren Zähnezahl der Innenverzahnung des Kupplungsrads im Vergleich zur Zähnezahl des außenverzahnten Zahnriemens das Kupplungsrad in die gleiche Richtung bewegen wie der Wellgenerator, so dass dann die Drehbewegungen von Wellgenerator und Kupplungsriemen gleichgerichtet wären.

Der Abtrieb erfolgt vorteilhafterweise dann über das zweite Hohlrad und nicht direkt über das verformbare kraftübertragende Ringelement, also den Zahnriemen, wie es bei herkömmlichen Wellgetrieben üblich wäre, sondern nur mittelbar, nämlich über den zweiten Zahneingriff zwischen außenverzahntem Zahnriemen und innenverzahntem zweiten Hohlrad.

Geht man nun bei zur Drehrichtung des Wellgenerators entgegengesetzter Drehrichtung des Zahnriemens weiter zum zweiten Zahneingriff, nämlich zum Zahneingriff des außenverzahnten Zahnriemens mit dem zweiten Hohlrad, so ergibt sich aufgrund der größeren Zähnezahl auch der Innenverzahnung des zweiten Hohlrades im Vergleich zur Außenverzahnung des Zahnriemens, dass das Hohlrad oder Abtriebsrad dieselbe Drehrichtung aufweisen würde, wie der Wellgenerator, wenn der Riemen festgesetzt wäre und lediglich der Wellgenerator und das Abriebsrad rotieren würden.

Der außenverzahnte Zahnriemen dreht sich aber, wie oben festgestellt, entgegengesetzt zur Drehrichtung des Wellgenerators, sodass durch den Zahneingriff sowohl die durch das festgesetzte Kupplungsrad erzeugte Drehung des Zahnriemens auf das Abtriebshohlrad übertragen wird, als auch additiv die Drehung, die allein durch den rotierenden Wellgenerator im Verhältnis von Zahnriemen und Abtriebshohlrad erzeugt wird.

Sofern sich die Drehungen nicht aufheben, verbleibt also eine Differenz, die das Übersetzungsverhältnis kennzeichnet. Das Übersetzungsverhältnis errechnet sich bei dem erfindungsgemäßen Wellgetriebe zu

$$i = \frac{z_K}{z_A - z_K}$$

wobei $z_K$ = Zähnezahl Kupplungshohlrad, $z_A$ = Zähnezahl Abtriebshohlrad.

Eine vorteilhafte Weiterbildung besteht darin, dass der Wellgenerator als umlaufender Planetenradträger mit abrollseitig unprofilierten Planetenrädern ausgebildet ist, die auf dem Rücken des kraftübertragenden Elementes mit einem Abrolldurchmesser abrollen, der größer ist als der sich aus dem Innenumfange des kraftübertragenden Elementes ergebende rechnerische Innendurchmesser und damit das kraftübertragende Elementes über die Peripherie der Hohlräder umlaufend verformen.

Mit einer solchen Ausführung von Planetenrädern, die in weiterer vorteilhafter Ausbildung mit Kugellagern versehen und auf dem Planetenträger gelagert sein können, ergibt sich eine einfache Bauweise bei einer sehr präzisen und hochgenauen Führung, so dass ein sehr leicht laufendes und wartungsarmes Getriebe entsteht.

Eine weitere vorteilhafte Ausbildung besteht darin, dass der Wellgenerator als umlaufender Planetenträger mit zwei Planetenpaaren ausgebildet ist und unter ellipsenartiger Verformung des kraftübertragenden Ringelements in umlaufend über die Peripherie des ersten und zweiten Hohlrads verlagerten Zahneingriffsbereichen mit entsprechenden Teilbereichen der Innenverzahnung des ersten und des zweiten Hohlrads in Eingriff steht. Auch hier ergibt sich bei lediglich zwei Eingriffsbereichen und ellipsenartige Verformung des Zahnriemens ein sehr leicht laufendes Umlaufgetriebe, welches kaum Neigung zur Hemmung aufweist.

Eine weitere vorteilhafte Ausbildung besteht darin, dass der Wellgenerator als umlaufender Planetenträger mit drei Planetenpaaren ausgebildet ist und die Außenverzahnung des kraftübertragenden Elements in drei durch den Kraftwellenerzeuger umlaufend über die Peripherie des ersten und zweiten Hohlrads verlagerten Zahneingriffsbereichen mit entsprechenden Teilbereichen der Innenverzahnung des ersten und des zweiten Hohlrads in Eingriff steht. Durch eine solche Getriebebauart ergibt sich eine Aufteilung des Drehmoments und der zugehörigen Kräfte sowohl in Bezug auf die Verzahnung des Zahnriemens als auch auf die Verzahnung der Hohlräder. Dadurch lassen sich die die Durchmesser der Getriebe, der Modul der Verzahnungen und somit die Baugröße minimieren.

Natürlich ist es bei entsprechenden Abmessungen auch möglich, dass der Wellgenerator nur aus einem umlaufenden, exzentrisch gelagerten Kraftwellenerzeuger besteht und nur ein umlaufender Eingriffsbereich zwischen kraftübertragendem Element und erstem und zweitem Hohlrads ausgebildet ist.

Eine weitere, besonders einfach herzustellende und damit vorteilhafte Ausbildung besteht darin, dass das erste Hohlrad gehäusefest ausgebildet ist.

Eine weitere vorteilhafte Ausbildung besteht darin, dass das erste Hohlrad antreibbar ausgebildet ist, vorzugsweise in gleichem Drehsinn wie der Wellgenerator. Damit können Zusatzmomente oder Zusatzdrehungen bzw. Drehgeschwindigkeiten aufgebracht werden und damit die Übersetzungen verändert werden.

Das erfindungsgemäße Wellgetriebe lässt sich vorteilhaft für ein Lenkungsgetriebe in einer elektrisch unterstützten Kraftfahrzeuglenkung verwenden, vorzugsweise in einem mehrstufigen Lenkungsgetriebe, wobei bei dem Lenkungsgetriebe mindestens eine Stufe als Wellgetriebe nach der Lehre der Erfindung ausgebildet ist.

Ein derartig ausgebildetes Getriebe kann hohe Übersetzungen bei durchgängig hohen Wirkungsgraden realisieren. Konventionelle mehrstufige Stirnradgetriebe werden dagegen in solchen Einsatzgebieten besonders im Teillastbereich durch einen sehr niedrigen Wirkungsgrad beschränkt.

Bei einer elektrisch unterstützten Kraftfahrzeuglenkung wird das Eingangsdrehmoment vom Lenkrad über die in Form einer Kardanwelle ausgebildete Lenksäule bis zum Lenkgetriebe übertragen. Die Lenksäule ist mechanisch mit einem Getriebe, dem Lenkungsgetriebe verbunden, in welches auch das Drehmoment und die Drehzahl, d.h. die Leistung eines Elektromotors eingespeist wird. Sensorisch werden das auf das Lenkrad manuell aufgebrachte Lenkmoment und die Geschwindigkeit des Fahrzeugs ermittelt und für die Regelung der Höhe der Kraftunterstützung und Übersetzung des Lenkgetriebes ausgewertet.

Eine vorteilhafte Weiterbildung eines solchen mehrstufigen Lenkungsgetriebes besteht darin, dass eine dem Wellgetriebe vor- oder nachgelagerte Stufe als Riementrieb, vorzugsweise als schrägverzahnter Zahnriementrieb ausgebildet ist. Eine solcher schrägverzahnter Zahnriementrieb ist bei hoher Präzision besonders vibrationsarm und darum leise im Betrieb.

Eine weitere vorteilhafte Ausbildung des Lenkgetriebes besteht darin, dass eine dem Wellgetriebe vor- oder nachgelagerte Stufe als Stirnradgetriebe ausgebildet ist. Dadurch ergibt sich bessere Nutzung des zur Verfügung stehenden Bauraums oder eine noch höhere Übersetzung bzw. Leistungsübertragung besonders für die nachgelagerte Stufe hinter dem Wellgetriebe.

Eine weitere vorteilhafte Ausbildung des Lenkgetriebes besteht darin, dass eine dem Wellgetriebe vor- oder nachgelagerte Stufe als Zyklobeltgetriebe mit einem Doppelzahnriemen ausgebildet ist. In Verbindung mit einer Planetenstufe ist auch dies zur Steigerung der Übersetzung sinnvoll.

Eine weitere vorteilhafte Ausbildung des Lenkgetriebes besteht darin, dass das Wellgetriebe als solches als Zyklobeltgetriebe mit einem Doppelzahnriemen ausgebildet ist.

Anhand eines Ausführungsbeispiels soll die Erfindung näher erläutert werden. Es zeigen

Fig. 1      eine Prinzipskizze eines Lenkungsgetriebes mit einem erfindungsgemäßen Wellgetriebe,

Fig. 2      das Lenkungsgetriebe gern. Fig. 1 mit eingezeichnetem Leistungsfluss,

Fig. 3      eine prinzipielle Schnittdarstellung der Eingriffsbereiche des erfindungsgemäßen Wellgetriebes,

Fig. 4      eine prinzipielle Darstellung der ellipsenartigen Verformung des Zahnriemens des erfindungsgemäßen Wellgetriebes durch einen umlaufenden Planetenträger mit zwei Planetenpaaren

Fig. 5      eine Prinzipskizze einer weiteren Ausbildung eines Lenkungsgetriebes mit einem erfindungsgemäßen Wellgetriebe,

Fig. 6      eine prinzipielle Darstellung des Leistungsflusses beim erfindungsgemäßen Wellgetriebe.

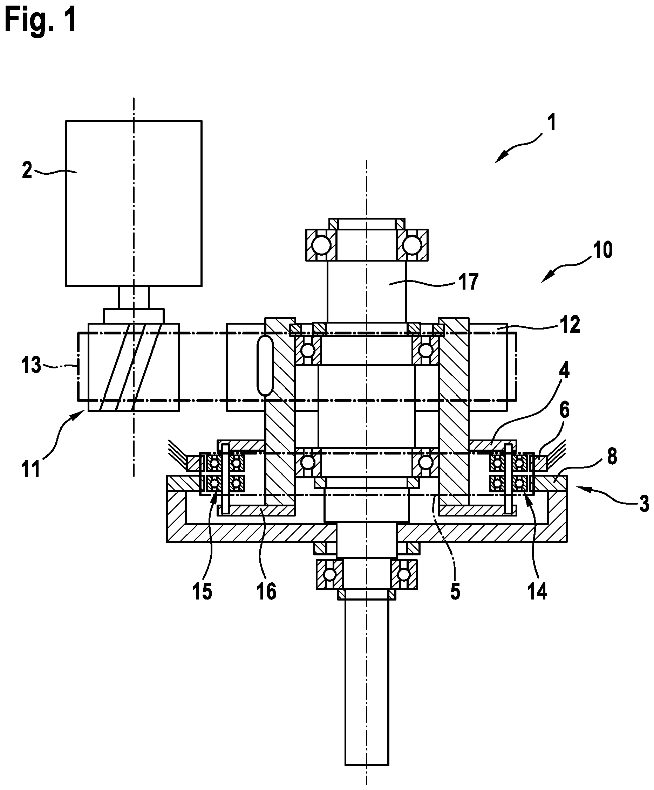

Die Fig. 1 zeigt in Form einer Prinzipskizze ein Lenkungsgetriebe 1 in einer durch einen Elektromotor 2 unterstützten Kraftfahrzeuglenkung. Die Leistung des Elektromotors wird auf die Lenkungswelle 17 in der unten näherdargestellten Weise übertragen.

Dazu weist das Lenkungsgetriebe 1 ein erfindungsgemäßes Wellgetriebe 3 mit einem rotierenden Wellgenerator 4 auf, der eine umlaufende Radialkraftwelle erzeugt, die ein kraftübertragendes, elastisches Ringelement umlaufend radial verformt, hier nämlich einen mit einer Außenverzahnung versehenen Zahnriemen 5.

Das Funktionsprinzip erkennt man am besten in der Zusammenschau der Figur 1 und den Figuren 3, 4 und 6.

Der Elektromotor 2 dreht dabei den Wellgenerator 4 und treibt diesen an über ein zwischengeschaltetes Riemengetriebe 10, welches aus einem auf der Motorwelle angeordneten Ritzel 11 als Antriebsrad, einem auf den Wellgenerator 4 angeordneten Abtriebsrad 12 und einem beide Räder verbindenden schrägverzahnten Riemen 13 besteht.

Das Wellgetriebe 3 weist ein mit einer Innenverzahnung versehenes erstes Hohlrad 6 auf, wobei der Teilkreisdurchmesser des theoretisch in Kreisform vorgestellten mit einer Außenverzahnung versehenen Zahnriemens 5 kleiner ist als der Teilkreisdurchmesser der Innenverzahnung des ersten Hohlrads 6. Der elastische Zahnriemen 5 und damit seine Außenverzahnung wird so in zwei gegenüberliegenden und durch den Wellgenerator 4 verformten, umlaufend über die Peripherie des ersten Hohlrads 6 verlagerten Zahneingriffsbereichen 7 mit entsprechenden Teilbereichen der Innenverzahnung des ersten Hohlrads 6 in Eingriff gebracht.

Der elastisch verformbare elastomere Zahnriemen 5 ist ein Standardbauteil und damit relativ einfach herzustellen.

Zum erfindungsgemäßen Wellgetriebe 3 gehört weiterhin ein zweites, ebenfalls mit einer Innenverzahnung versehenes Hohlrad 8. Der Teilkreisdurchmesser der Außenverzahnung des elastischen Zahnriemens 5 ist dabei auch kleiner ist als der Teilkreisdurchmesser der Innenverzahnung des zweiten Hohlrads 8. Der elastomere Zahnriemen 5, verformt durch den Wellgenerator 4, steht in den umlaufend verlagerten Zahneingriffsbereichen 7 nun gleichermaßen mit Teilbereichen der Innenverzahnung des zweiten Hohlrads 8 in Eingriff. Das erste Hohlrad 6 und der Zahnriemen 5, das zweite Hohlrad 8 und der Zahnriemen 5, als auch das erste Hohlrad 6 und das zweite Hohlrad 8 weisen jeweils unterschiedliche Zähnezahlen auf.

Das erste Hohlrad 6 ist hier gehäusefest ausgebildet und dient als so genanntes "Kupplungsrad", welche die Drehbewegung des Zahnriemens und des Wellgenerators in der Weise kuppelt, dass beim ersten Zahneingriff des außenverzahnten Zahnriemens 5 in die Innenverzahnung des ersten Hohlrads 6 der Zahnriemen sich bei gehäusefestem Kupplungsrad entgegengesetzt zur Drehrichtung des Wellgenerator 4 bewegt bzw. dreht.

Der Abtrieb erfolgt über das zweite Hohlrad 8, nämlich über den zweiten Zahneingriff zwischen außenverzahntem Zahnriemen und innenverzahntem zweiten Hohlrad.

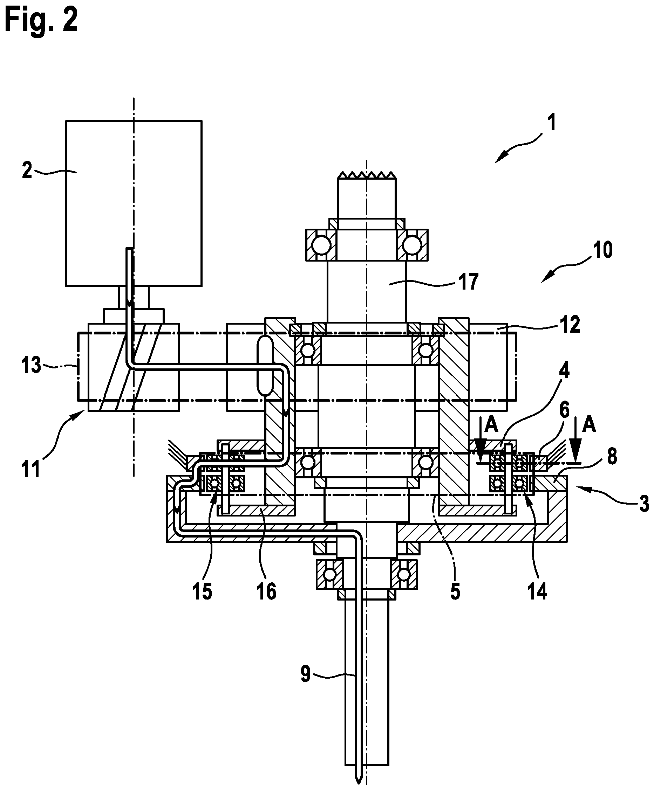

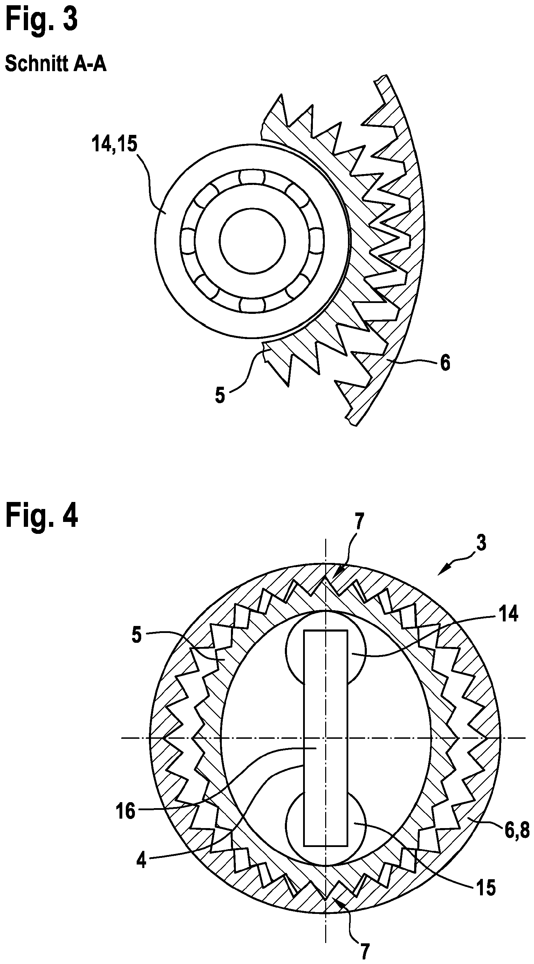

Der Leistungsfluss 9 der Motorunterstützung für das Lenkraddrehmoment ist in der Fig.2 verdeutlicht, die ansonsten der Fig. 1 entspricht. In dieser Figur ist aber auch der Schnitt A-A eingezeichnet, der prinzipiell in der Fig. 3 dargestellt ist.

In der Zusammenschau der Fig.3 und Fig.4 wird auch deutlich, dass der Wellgenerator 4 als umlaufender Planetenradträger 16 mit abrollseitig unprofilierten Planetenrädern 14, 15 ausgebildet ist, die auf dem Rücken des Zahnriemens 5 mit einem Abrolldurchmesser abrollen, der größer ist als der sich aus dem Innenumfang des Zahnriemens ergebende rechnerische Innendurchmesser. Damit wird der Zahnriemen und seine Außenverzahnung über die Peripherie der Hohlräder umlaufend verformt. Der Planetenradträger 16 und damit der Zahneingriffsbereich 7 läuft also mit der vom Motor über das zwischengeschaltetes Riemengetriebe 10 aufgebrachten Drehzahl um.

Die Planetenräder 14 und 15 sind, wie aus Fig. 1 und 2 ersichtlich, hier jeweils in doppelter, jedoch einzeln gelagerter Ausführung auf dem Planetenradträger 16 ausgebildet, damit die Außenverzahnung des Zahnriemens 5 gleichermaßen in die Innenverzahnung der Hohlräder 6 und 8 eingedrückt werden kann.

Ausgehend davon, dass sich der Zahnriemen sich bei gehäusefestem Kupplungsrad 6 entgegengesetzt zur Drehrichtung des Wellgenerator 4 bewegt bzw. dreht, ergibt sich beim Zahneingriff des außenverzahnten Zahnriemens mit dem zweiten Hohlrad 8 aufgrund der größeren Zähnezahl auch der Innenverzahnung des zweiten Hohlrades 8 im Vergleich zur Außenverzahnung des Zahnriemens 5, dass das Hohlrad oder Abtriebsrad dieselbe Drehrichtung aufweisen würde, wie der Wellgenerator, wenn der Riemen festgesetzt wäre.

Der außenverzahnte Zahnriemen 5 bewegt bzw. dreht sich aber, wie oben beschrieben, entgegengesetzt zur Drehrichtung des Wellgenerators, sodass durch den Zahneingriff zwischen Zahnriemen 5 und Abtriebsrad 8 sowohl die durch das festgesetzte Kupplungsrad 6 erzeugte Drehung des Zahnriemens 5 auf das Abtriebsrad 8 übertragen wird, als auch additiv die Drehung, die allein durch den rotierenden Wellgenerator 4 im Verhältnis von Zahnriemen 5 und Abtriebsrad 8 erzeugt wird. Da beide Drehungen entgegengesetzt sind, wie dargelegt, subtrahieren sich die Drehungen. Das Übersetzungsverhältnis errechnet sich bei dem erfindungsgemäßen Wellgetriebe zu

$$i = \frac{z_K}{z_A - z_K}$$

wobei $z_K$ = Zähnezahl Kupplungshohlrad, $z_A$ = Zähnezahl Abtriebshohlrad.

Aus den obigen Betrachtungen ergibt sich auch, dass bei gleicher Zähnezahl von Kupplungsrad 6 und Abtriebsrad 8 gar keine Drehbewegung übertragen wird, das Wellgetriebe also nur in sich rotieren würde. Rein rechnerisch würde die Übersetzung unendlich groß, was dann heißt, dass die Abtriebswelle steht und nur der Planetenträger mit den Planetenpaaren leer rotiert, wobei der Zahnriemen innerhalb des Wellgetriebes dreht.

Der Wellgenerator ist also als umlaufender Planetenträger mit zwei Planetenpaaren ausgebildet wobei der Zahnriemen unter ellipsenartiger Verformung umlaufend über die Peripherie des ersten und zweiten Hohlrads mit letzteren in Eingriff steht.

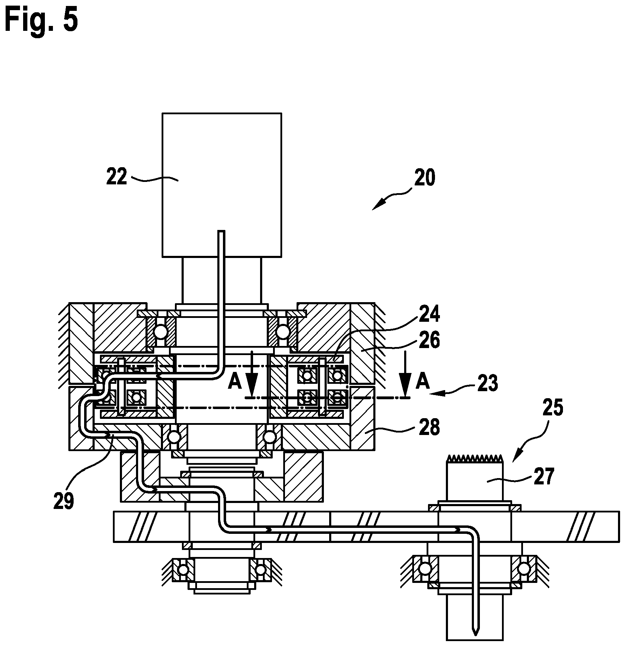

Fig. 5 zeigt eine andere Ausbildung eines Lenkungsgetriebes 20 in einer durch einen Elektromotor 22 unterstützten Kraftfahrzeuglenkung mit einem erfindungsgemäßen Wellgetriebe 23. Bei dieser Ausführung treibt der Motor 22 einen Wellgenerator 24 über seine Abtriebswelle direkt an. Auch hier sind im Wellgetriebe ein innenverzahntes erstes Hohlrad/Kupplungshohlrad 26 und ein innenverzahntes zweites Hohlrad/Abtriebshohlrad 28 vorgesehen. Dem Wellgetriebe 23 ist ein schrägverzahntes Stirnradgetriebe 25 nachgeordnet, welches die Abtriebsdrehzahl des zweiten Hohlrads bzw. Abtriebshohlrads 28 noch einmal auf die Lenkungswelle 27 übersetzt. Auch hier ist zur Verdeutlichung noch einmal der Leistungsfluss 29 eingezeichnet.

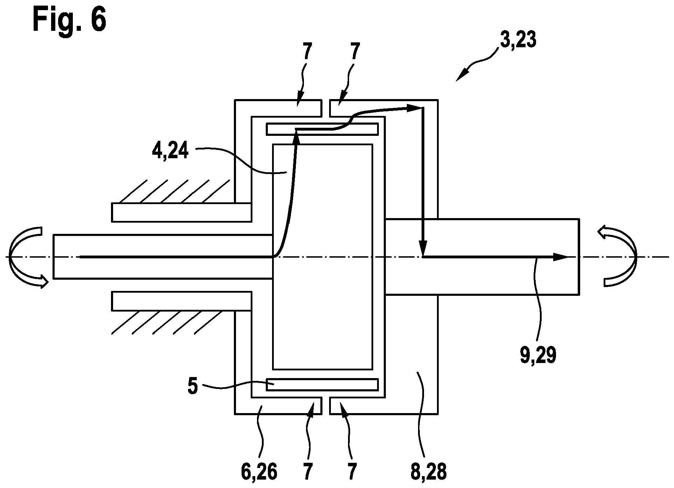

Bei der Figur 6 handelt es sich lediglich um eine grobe prinzipielle Darstellung, bei der noch einmal der Leistungsfluss 9, 29 zwischen innenverzahntem erstes Hohlrad 6, 26 und innenverzahntem zweitem Hohlrad 8, 28 dargestellt ist.

| | |
|---|---|
| 1 | Lenkungsgetriebe |
| 2 | Elektromotor |
| 3 | Wellgetriebe |
| 4 | Wellgenerator |
| 5 | Zahnriemen |
| 6 | innenverzahntes erstes Hohlrad/Kupplungsshohlrad |
| 7 | Zahneingriffsbereich |
| 8 | innenverzahntes zweites Hohlrad/Abtriebshohlrad |
| 9 | Leistungsfluss der Motorunterstützung |
| 10 | zwischengeschaltetes Riemengetriebe |
| 11 | Antriebsrad / Ritzel |
| 12 | Abtriebsrad |
| 13 | schrägverzahnter Antriebsriemen |
| 14 | Planetenrad |
| 15 | Planetenrad |
| 16 | Planetenradträger |
| 17 | Lenkungswelle |
| 20 | Lenkungsgetriebe |
| 22 | Elektromotor |
| 23 | Wellgetriebe |
| 24 | Wellgenerator |
| 25 | Stirnradgetriebe |
| 26 | innenverzahntes erstes Hohlrad/Kupplungsshohlrad |
| 27 | Lenkungswelle |
| 28 | innenverzahntes zweites Hohlrad/Abtriebshohlrad |
| 29 | Leistungsfluss der Motorunterstützung |

## Patentansprüche

1. Wellgetriebe (3, 23) mit einem rotierenden Wellgenerator (4, 24), der eine umlaufende Radialkraftwelle erzeugt, die ein mit einer Außenverzahnung versehenes kraftübertragendes, elastisches Ringelement umlaufend radial verformt, und mit einem mit einer Innenverzahnung versehenen ersten Hohlrad (6, 26), wobei der Teilkreisdurchmesser der Außenverzahnung des kraftübertragenden Ringelements kleiner ist als der Teilkreisdurchmesser der Innenverzahnung des ersten Hohlrads (6, 26) und die Außenverzahnung des kraftübertragenden Ringelements in mindestens zwei durch den Wellgenerator (4, 24) verformten und umlaufend über die Peripherie des ersten Hohlrads (6, 26) verlagerten Zahneingriffsbereichen (7) mit entsprechenden Teilbereichen der Innenverzahnung des ersten Hohlrads (6, 26) in Eingriff steht, wobei ein zweites mit einer Innenverzahnung versehenes Hohlrad (8, 28) vorgesehen ist und der Teilkreisdurchmesser der Außenverzahnung des kraftübertragenden Ringelements auch kleiner ist als der Teilkreisdurchmesser der Innenverzahnung des zweiten Hohlrads (8, 28), wobei das Ringelement in den umlaufend verlagerten Zahneingriffsbereichen gleichermaßen mit Teilbereichen der Innenverzahnung des zweiten Hohlrads (8, 28) in Eingriff steht, **dadurch gekennzeichnet, dass** das elastisch verformbare kraftübertragende Ringelement als elastomerer Zahnriemen (5) ausgebildet ist,
wobei das erste Hohlrad (6, 26) und der Zahnriemen (5), das zweite Hohlrad (8, 28) und der Zahnriemen (5) sowie das erste Hohlrad (6, 26) und das zweite Hohlrad (8, 28) jeweils unterschiedliche Zähnezahlen aufweisen.

2. Wellgetriebe (3, 23) nach Anspruch 1, bei dem der Antrieb über den Wellgenerator (4, 24) und der Abtrieb über das zweite Hohlrad (8, 28) erfolgt.

3. Wellgetriebe (3, 23) nach Anspruch 1 oder 2, bei dem der Wellgenerator (4, 24) als umlaufender Planetenradträger (16) mit abrollseitig unprofilierten Planetenrädern (14, 15) ausgebildet ist, die auf dem Rücken des kraftübertragenden Ringelementes mit einem Abrolldurchmesser abrollen, der größer ist als der sich aus dem Innenumfang des kraftübertragen-den Ringelementes ergebende rechnerische Innen-durchmesser und damit das kraftübertragende Ringelement über die Peripherie der Hohlräder (6, 8, 26, 28) umlaufend verformen.

4. Wellgetriebe (3, 23) nach einem der Ansprüche 1 bis 3, bei dem der Wellgenerator (4, 24) mit zwei Planetenpaaren (14, 15) ausgebildet ist und unter ellipsenartiger Verformung des kraftübertragenden Ringelements in umlaufend über die Peripherie des ersten und zweiten Hohlrads (6, 8, 26, 28) verlagerten Zahneingriffsbereichen (7) mit entsprechenden Teilbereichen der Innenverzahnung des ersten und des zweiten Hohlrads (6, 8, 26, 28) in Eingriff steht.

5. Wellgetriebe (3, 23) nach einem der Ansprüche 1 bis 3, bei dem der Wellgenerator (4, 24) mit drei Planetenpaaren ausgebildet ist und die Außenverzahnung des kraftübertragenden Ringelements in drei durch den Kraftwellenerzeuger umlaufend über die Peripherie des ersten und zweiten Hohlrads (6, 8, 26, 28) verlagerten Zahneingriffsbereichen (7) mit entsprechenden Teilbereichen der Innenverzahnung des ersten und des zweiten Hohlrads (6, 8, 26, 28) in Eingriff steht.

6.  Wellgetriebe (3, 23) nach einem der Ansprüche 1 bis 5, bei dem die Planeten (14, 15) mit Wälzlagern im Planetenträger (16) gelagert sind, vorzugsweise mit Kugellagern.

7.  Wellgetriebe (3, 23) nach einem der Ansprüche 1 bis 6, bei dem das erste Hohlrad (6, 26) gehäusefest ausgebildet ist.

8.  Wellgetriebe (3, 23) nach einem der Ansprüche 1 bis 6, bei dem das erste Hohlrad (6, 26) antreibbar ausgebildet ist, vorzugsweise in gleichem Drehsinn wie der Wellgenerator (4, 24).

9.  Lenkungsgetriebe (1, 20) in einer elektrisch unterstützten Kraftfahrzeuglenkung, vorzugsweise mehrstufiges Lenkungsgetriebe (1, 20), bei dem mindestens eine Stufe als Wellgetriebe (3, 23) nach einem der Ansprüche 1 bis 8 ausgebildet ist.

10. Lenkungsgetriebe (1, 20) nach Anspruch 9, bei dem eine dem Wellgetriebe (3, 23) vor- oder nachgelagerte Stufe als Riementrieb, vorzugweise als schrägverzahnter Zahnriementrieb (10) ausgebildet ist.

11. Lenkungsgetriebe (1, 20) nach Anspruch 9, bei dem eine dem Wellgetriebe (3, 23) vor- oder nachgelagerte Stufe als Stirnradgetriebe (25) ausgebildet ist.

12. Lenkungsgetriebe (1, 20) nach Anspruch 9, bei dem eine dem Wellgetriebe (3, 23) vor- oder nachgelagerte Stufe als Zyklobeltgetriebe mit einem Doppelzahnriemen ausgebildet ist.

13. Lenkungsgetriebe (1, 20) nach einem der Ansprüche 9 bis 12, bei dem das Wellgetriebe (3, 23) als Zyklobeltgetriebe mit einem Doppelzahnriemen ausgebildet ist.

14. Kraftfahrzeug mit einem Lenkungsgetriebe (1, 20) nach einem der Ansprüche 9 bis 13.

## Claims

1.  Strain wave gear (3, 23) having a rotating wave generator (4, 24), which generates a circulating radial force wave which circumferentially radially deforms a force-transmitting resilient ring element provided with an external toothing, and having a first ring gear (6, 26) provided with an internal toothing, wherein the pitch circle diameter of the external toothing of the force-transmitting ring element is smaller than the pitch circle diameter of the internal toothing of the first ring gear (6, 26) and, in at least two tooth engagement regions (7) deformed by the wave generator (4, 24) and displaced circumferentially over the periphery of the first ring gear (6, 26), the external toothing of the force-transmitting ring element meshes with corresponding subregions of the internal toothing of the first ring gear (6, 26), wherein a second ring gear (8, 28) provided with an internal toothing is provided and the pitch circle diameter of the external toothing of the force-transmitting ring element is also smaller than the pitch circle diameter of the internal toothing of the second ring gear (8, 28), wherein the ring element likewise meshes with subregions of the internal toothing of the second ring gear (8, 28) in the circumferentially displaced tooth engagement regions, **characterized in that** the elastically deformable force-transmitting ring element is formed as a toothed elastomer belt (5), wherein the first ring gear (6, 26) and the toothed belt (5), the second ring gear (8, 28) and the toothed belt (5) and also the first ring gear (6, 26) and the second ring gear (8, 28) each have different numbers of teeth.

2.  Strain wave gear (3, 23) according to Claim 1, in which the drive is carried out via the wave generator (4, 24) and the output is carried out via the second ring gear (8, 28).

3.  Strain wave gear (3, 23) according to Claim 1 or 2, in which the wave generator (4, 24) is formed as a revolving planet gear carrier (16) with unprofiled planet gears (14, 15) on the rolling side, which roll on the rear of the force-transmitting ring element with a rolling diameter which is larger than the calculated internal diameter resulting from the internal circumference of the force-transmitting ring element and therefore deform the force-transmitting ring element circumferentially over the periphery of the ring gears (6, 8, 26, 28).

4.  Strain wave gear (3, 23) according to one of Claims 1 to 3, in which the wave generator (4, 24) is formed with two pairs of planets (14, 15) and, with elliptical deformation of the force-transmitting ring element, meshes with corresponding subregions of the internal toothing of the first and the second ring gear (6, 8, 26, 28) in tooth engagement regions (7) displaced circumferentially over the periphery of the first and second ring gear (6, 8, 26, 28).

5.  Strain wave gear (3, 23) according to one of Claims 1 to 3, in which the wave generator (4, 24) is formed with three pairs of planets and the external toothing of the force-transmitting ring element meshes with corresponding subregions of the internal toothing of the first and the second ring gear (6, 8, 26, 28) in three tooth engagement regions (7) displaced by the force wave generator circumferentially over the periphery of the first and second ring gear (6, 8, 26, 28).

6. Strain wave gear (3, 23) according to one of Claims 1 to 5, in which the planets (14, 15) are mounted in the planet carrier (16) by rolling-contact bearings, preferably by ball bearings.

7. Strain wave gear (3, 23) according to one of Claims 1 to 6, in which the first ring gear (6, 26) is configured in a manner fixed to the housing.

8. Strain wave gear (3, 23) according to one of Claims 1 to 6, in which the first ring gear (6, 26) is configured in a drivable manner, preferably in the same direction of rotation as the wave generator (4, 24).

9. Steering gear (1, 20) in an electrically assisted motor vehicle steering system, preferably multi-stage steering gear (1, 20) in which at least one stage is formed as a strain wave gear (3, 23) according to one of Claims 1 to 8.

10. Steering gear (1, 20) according to Claim 9, in which a stage placed upstream or downstream of the strain wave gear (3, 23) is formed as a belt drive, preferably as a helical toothed belt drive (10).

11. Steering gear (1, 20) according to Claim 9, in which a stage placed upstream or downstream of the strain wave gear (3, 23) is formed as a spur gear (25).

12. Steering gear (1, 20) according to Claim 9, in which a stage placed upstream or downstream of the strain wave gear (3, 23) is formed as a cyclobelt gear with a double-toothed belt.

13. Steering gear (1, 20) according to one of Claims 9 to 12, in which the strain wave gear (3, 23) is formed as a cyclobelt gear with a double-toothed belt.

14. Motor vehicle having a steering gear (1, 20) according to one of Claims 9 to 13.


**Revendications**

1. Réducteur elliptique (3, 23) avec un générateur d'ondes rotatif (4, 24), qui produit une onde de force radiale circonférentielle qui déforme radialement en circonférence un élément annulaire élastique de transmission de force pourvu d'une denture extérieure, et avec une première couronne (6, 26) pourvue d'une denture intérieure, le diamètre primitif de référence de la denture extérieure de l'élément annulaire de transmission de force étant inférieur au diamètre primitif de référence de la denture intérieure de la première couronne (6, 26) et la denture extérieure de l'élément annulaire de transmission de force étant en prise avec des zones partielles correspondantes de la denture intérieure de la première couronne (6, 26) dans au moins deux zones d'engrènement (7) déformées par le générateur d'ondes (4, 24) et déplacées en circonférence sur la périphérie de la première couronne (6, 26), une deuxième couronne (8, 28) pourvue d'une denture intérieure étant prévue et le diamètre primitif de référence de la denture extérieure de l'élément annulaire de transmission de force étant également inférieur au diamètre primitif de référence de la denture intérieure de la deuxième couronne (8, 28), l'élément annulaire étant en prise de la même manière avec des zones partielles de la denture intérieure de la deuxième couronne (8, 28) dans les zones d'engrènement déplacées en circonférence, **caractérisé en ce que** l'élément annulaire de transmission de force déformable élastiquement est réalisé sous forme de courroie dentée élastomère (5), la première couronne (6, 26) et la courroie dentée (5), la deuxième couronne (8, 28) et la courroie dentée (5) ainsi que la première couronne (6, 26) et la deuxième couronne (8, 28) présentant chacune un nombre de dents différent.

2. Réducteur elliptique (3, 23) selon la revendication 1, dans lequel l'entraînement est effectué par l'intermédiaire du générateur d'ondes (4, 24) et la sortie par l'intermédiaire de la deuxième couronne (8, 28).

3. Réducteur elliptique (3, 23) selon la revendication 1 ou 2, dans lequel le générateur d'ondes (4, 24) est réalisé sous forme de porte-satellites circonférentiel (16) avec des satellites (14, 15) non profilés du côté du roulement, qui roulent sur le dos de l'élément annulaire de transmission de force avec un diamètre de roulement, qui est supérieur au diamètre intérieur calculé obtenu à partir de la circonférence intérieure de l'élément annulaire de transmission de force et qui déforment ainsi en circonférence l'élément annulaire de transmission de force sur la périphérie des couronnes (6, 8, 26, 28).

4. Réducteur elliptique (3, 23) selon l'une quelconque des revendications 1 à 3, dans lequel le générateur d'ondes (4, 24) est réalisé avec deux paires de satellites (14, 15) et, avec une déformation elliptique de l'élément annulaire de transmission de force, est en prise avec des zones partielles correspondantes de la denture intérieure de la première et de la deuxième couronne (6, 8, 26, 28) dans des zones d'engrènement (7) déplacées en circonférence sur la périphérie de la première et de la deuxième couronne (6, 8, 26, 28).

5. Réducteur elliptique (3, 23) selon l'une quelconque des revendications 1 à 3, dans lequel le générateur d'ondes (4, 24) est réalisé avec trois paires de satellites et la denture extérieure de l'élément annulaire de transmission de force est en prise avec des zones partielles correspondantes de la denture intérieure de la première et de la deuxième couronne (6, 8, 26, 28) dans trois zones d'engrènement (7) déplacées en circonférence par le générateur d'onde de force sur la périphérie de la première et de la deuxième couronne (6, 8, 26, 28).

6. Réducteur elliptique (3, 23) selon l'une quelconque des revendications 1 à 5, dans lequel les satellites (14, 15) sont montés dans le porte-satellites (16) avec des paliers à roulement, de préférence avec des roulements à billes.

7. Réducteur elliptique (3, 23) selon l'une quelconque des revendications 1 à 6, dans lequel la première couronne (6, 26) est réalisée sous forme solidaire du boîtier.

8. Réducteur elliptique (3, 23) selon l'une quelconque des revendications 1 à 6, dans lequel la première couronne (6, 26) est réalisée sous forme entraînable, de préférence dans le même sens de rotation que le générateur d'ondes (4, 24).

9. Mécanisme de direction (1, 20) dans une direction de véhicule automobile à assistance électrique, de préférence mécanisme de direction (1, 20) à plusieurs étages, dans lequel au moins un étage est réalisé sous forme de réducteur elliptique (3, 23) selon l'une quelconque des revendications 1 à 8.

10. Mécanisme de direction (1, 20) selon la revendication 9, dans lequel un étage situé en amont ou en aval du réducteur elliptique (3, 23) est réalisé sous forme de de transmission par courroie, de préférence sous forme de transmission par courroie dentée à denture hélicoïdale (10).

11. Mécanisme de direction (1, 20) selon la revendication 9, dans lequel un étage situé en amont ou en aval du réducteur elliptique (3, 23) est réalisé sous forme d'engrenage droit (25).

12. Mécanisme de direction (1, 20) selon la revendication 9, dans lequel un étage situé en amont ou en aval du réducteur elliptique (3, 23) est réalisé sous forme d'engrenage cyclique avec une courroie dentée double.

13. Mécanisme de direction (1, 20) selon l'une quelconque des revendications 9 à 12, dans lequel le réducteur elliptique (3, 23) est réalisé sous forme d'engrenage cyclique avec une courroie dentée double.

14. Véhicule automobile avec un mécanisme de direction (1, 20) selon l'une quelconque des revendications 9 à 13.

# Fig. 1

# Fig. 2

# Fig. 3

**Schnitt A-A**

14,15

5

6

# Fig. 4

7

3

5

14

16

4

6,8

15

7

# Fig. 5

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2906143 A

- DE 4021923 A1